# EUROPÄISCHE PATENTSCHRIFT

(11) **EP 3 100 015 B1**
(45) Veröffentlichungstag und Bekanntmachung des Hinweises auf die Patenterteilung: **04.04.2018**
(21) Anmeldenummer: 14733223.3
(22) Anmeldetag: 30.06.2014
(51) Int. Cl.: G01L 9/00, G01L 27/00, G01M 3/40

(54) **VERFAHREN ZUM BETREIBEN EINES DRUCKMESSUMFORMERS SOWIE DRUCKMESSUMFORMER**
METHOD FOR OPERATING A PRESSURE TRANSDUCER AND PRESSURE TRANSDUCER
PROCÉDÉ PERMETTANT DE FAIRE FONCTIONNER UN TRANSDUCTEUR DE MESURE DE PRESSION ET TRANSDUCTEUR DE MESURE DE PRESSION

(30) Priorität: 28.01.2014 DE 102014201529
(43) Veröffentlichungstag der Anmeldung: 07.12.2016
(73) Patentinhaber: Siemens Aktiengesellschaft, 80333 München (DE)
(72) Erfinder: PAULITSCH, Christoph, 76137 Karlsruhe (DE); VON DOSKY, Stefan, 76149 Karlsruhe (DE)
(86) Internationale Anmeldenummer: PCT/EP2014/063791
(87) Internationale Veröffentlichungsnummer: WO 2015/113654

(56) Entgegenhaltungen:
- WO-A1-2013/004438
- DE-A1-102010 062 622
- US-B2- 7 026 645

## Beschreibung

Die Erfindung betrifft ein Verfahren zum Betreiben eines Druckmessumformers mit einem Drucksensor, der eine in Abhängigkeit eines Mediendrucks auslenkbare Messmembran auf einem Grundkörper aufweist, zwischen welchen eine Kavität mit einem Referenzdruck eingeschlossen ist, gemäß dem Oberbegriff des Anspruchs 1 sowie einen Druckmessumformer zur Prozessinstrumentierung gemäß dem Oberbegriff des Anspruchs 8.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen entsprechend einer beispielsweise von einer Leitstation vorgegebenen Strategie beeinflusst werden. Die Erfindung betrifft insbesondere im Bereich der Druckmesstechnik Feldgeräte mit einer Messzelle, die der Klasse der sogenannten "trockenen" Druckmesszellen zugeordnet werden kann. Bei dieser Art von Druckmesszellen ist keine Ölfüllung vorhanden, welche den Druck eines Prozessmediums auf einen kleinen und empfindlichen Drucksensor, der beispielsweise eine Siliziummembran aufweist, überträgt. In trockenen Druckmesszellen besitzt der Drucksensor dagegen eine medienberührte Membran, welche in Abhängigkeit eines zu messenden Mediendrucks auslenkbar ist.

Aus der WO 2013/004438 A1 ist eine trockene Druckmesszelle mit kapazitiver Erfassung der Auslenkung der Messmembran bekannt. Kern der Messzelle bildet dort ein keramischer Drucksensor, der eine biegsame Messmembran und einen Grundkörper aufweist, zwischen welchen eine Kavität mit einem Referenzdruck eingeschlossen ist. Die Auslenkung der Messmembran ist somit von einem Mediendruck, der medienseitig an der Messmembran anliegt, und dem Referenzdruck in der Kavität abhängig. Zur kapazitiven Erfassung der Auslenkung der Messmembran dienen zwei Kondensatoren, wobei ein erster Kondensator als Messkondensator eine Messelektrode besitzt, die an der Innenwand der Kavität im mittleren Bereich des Grundkörpers angeordnet ist, und wobei ein zweiter Kondensator als Referenzkondensator eine Referenzelektrode aufweist, welche sich im Randbereich des Grundkörpers auf der Innenwand der Kavität befindet. Eine Metallisierung, die auf der Seite der Messmembran aufgebracht ist, welche der Kavität zugewandt ist, bildet eine gemeinsame Gegenelektrode für die beiden Kondensatoren. Es wird beschrieben, dass die Kapazität des Referenzkondensators im fehlerfreien Fall entsprechend einer empirisch angelernten Funktion von der Kapazität des Messkondensators abhängig ist. Zur Fehlerdiagnose wird im Betrieb des Druckmessumformers überwacht, ob Wertepaare der Kapazität des Referenzkondensators und der Kapazität des Messkondensators innerhalb eines vorgegebenen Toleranzbereichs dem angelernten funktionalen Zusammenhang entsprechen. Ist dies nicht der Fall, wird auf eine Beschädigung der Messzelle geschlossen. Damit sind vor allem Schäden erkennbar, die zu einer Veränderung der Biegelinie der Messmembran führen. Als mögliche Ursachen sind ein Versagen der festen Verbindung an der Fügestelle zwischen Messmembran und Grundkörper oder in die Messmembran über die Halterung des Drucksensors eingetragene radiale Stauch- oder Streckspannungen genannt. Veränderungen der Zusammensetzung des in der Kavität befindlichen Mediums sind dagegen nicht zuverlässig erkennbar.

Unter rauen Prozessbedingungen, wie sie beispielsweise in der Papierindustrie vorliegen, oder bei Temperatursprüngen durch Reinigung oder Sterilisation im Bereich der Lebensmittelindustrie kann es zu Rissen oder Brüchen insbesondere an der Membran kommen, durch welche Prozessmedium in die Kavität des keramischen Drucksensors eindringt. Dies kann zum Ausfall des Druckmessumformers führen. Dass ein Druckmessumformer aufgrund eindringenden Prozessmediums ausgefallen ist, kann beispielsweise durch die Feststellung eines Kurzschlusses zwischen Kondensatorelektroden des Drucksensors erkannt werden. Es wird jedoch gewünscht, dass ein bevorstehender Ausfall möglichst früh im Vorhinein erkannt wird, damit Wartungspersonal entsprechende Maßnahmen, wie beispielsweise den rechtzeitigen Austausch des Druckmessumformers, frühzeitig planen und zu einem geeigneten Zeitpunkt durchführen kann, sodass unvorhergesehene Stillstände einer prozesstechnischen Anlage, in welcher der Druckmessumformer eingesetzt wird, vermieden werden können. Andere Druckmessumformer sind aus den US 5641911 und US 2013/0118265 bekannt. Der Erfindung liegt die Aufgabe zugrunde, ein Verfahren zum Betreiben eines Druckmessumformers sowie einen Druckmessumformer zu schaffen, die es ermöglichen, Veränderungen der Befüllung der Kavität des Drucksensors, insbesondere durch eindringendes Prozessmedium, frühzeitig zu erkennen, d. h. bevor ein Ausfall des Druckmessumformers stattgefunden hat.
Zur Lösung dieser Aufgabe weist das neue Verfahren der eingangs genannten Art die im kennzeichnenden Teil des Anspruchs 1 angegebenen Merkmale auf. In Anspruch 8 ist ein Druckmessumformer zur Durchführung des Verfahrens, in Anspruch 9 ein Computerprogramm und in Anspruch 10 ein Computerprogrammprodukt beschrieben. In den abhängigen Ansprüchen sind Weiterbildungen des Verfahrens angegeben.
Bei dem neuen Verfahren zum Betreiben eines Druckmessumformers wird somit der neue Weg beschritten, dass zur Diagnose die Kapazität eines Diagnosekondensators ausgewertet wird, der durch die auf derselben Fläche befindlichen Elektroden des Mess- und des Referenzkondensators gebildet wird. Die neue Diagnose anhand der Auswertung der Kapazität des Diagnosekondensators kann alternativ zu einer Diagnose anhand einer Auswertung der Kapazitäten von Mess- und/oder Referenzkondensator oder in Kombination mit dieser durchgeführt werden. Von erheblichem Vorteil dabei ist, dass die Kapazität des Diagnosekondensators weitgehend unabhängig vom jeweils am Druckmessumformer anliegenden Mediendruck und von der sich einstellenden Biegelinie der Messmembran ist. Da zumindest ein Teil des elektrischen Feldes zwischen den beiden Elektroden des Diagnosekondensators die Kavität des Drucksensors erfasst, wird seine Kapazität in erheblichem Maße durch die dielektrische Leitfähigkeit der in der Kavität befindlichen Materialien beeinflusst. Die neue Diagnose des Druckmessumformers erlaubt daher anhand der Auswertung der Kapazität des Diagnosekondensators eine zuverlässige Aussage über den Zustand der Befüllung der Kavität, insbesondere über Veränderungen der in der Kavität herrschenden relativen Luftfeuchtigkeit und/oder über in die Kavität eindringendes Prozessmedium, wodurch die dielektrische Leitfähigkeit der Befüllung verändert wird. Bei Veränderungen kann auf das Vorliegen eines Fehlers, insbesondere auf einen Riss oder Bruch der Messmembran oder einen Riss an der Fügestelle zwischen Messmembran und Grundkörper, geschlossen werden. Zudem ist anhand des zeitlichen Gradienten der Veränderung eine Prognose möglich, wann mit einem Totalausfall des Druckmessumformers gerechnet werden muss.

Eine exakte Ermittlung der aktuellen Kapazität des Diagnosekondensators wird beispielsweise bei Verwendung des bekannten Kapazität/Digital-Konverters (CDC) des Typs AD7746 von Analog Devices durch eine Umschaltung in einen Diagnosemodus ermöglicht, in welchem die beiden Elektroden des Diagnosekondensators an die Anschlüsse EXT bzw. CIN2 und die gemeinsame Gegenelektrode auf den Anschluss GND geschaltet werden. Dadurch wird erreicht, dass die Kapazitäten zwischen den Elektroden des Diagnosekondensators und der Gegenelektrode, welche dem Mess- und dem Referenzkondensator entsprechen, bei der Messung der Kapazität des Diagnosekondensators im Diagnosemodus wie Schirmkapazitäten behandelt und kompensiert werden. Das hat zudem den Vorteil, dass keine zusätzlichen Elektroden zur Realisierung des Diagnosekondensators benötigt werden. Die Erfindung ist daher in vorteilhafter Weise nicht mit einer Erhöhung des Hardware-Aufwands für den Druckmessumformer verbunden. Durch zusätzliche Messbereichsumschaltung im Kapazität/Digital-Konverter kann die vergleichsweise kleine Kapazität des Diagnosekondensators präzise gemessen werden. In einem Druckmessmodus oder bei der Messung der Kapazität des Mess- und Referenzkondensators für ergänzende, in der vorliegenden Anmeldung nicht betrachtete Arten der Diagnose des Druckmessumformers, kann der Kapazitäts/Digital-Konverter in bekannter Weise beschaltet werden. Im Druckmessmodus kann die Kapazität des Diagnosekondensators als parasitäre Kapazität oder Streukapazität angesehen werden, die aufgrund ihrer vergleichsweise geringen Größe kaum Einfluss auf das Messergebnis hat.

Materialrisse entstehen zunächst im Bereich hoher mechanischer Spannungen, die sich vorwiegend im Randbereich der Messmembran befinden, sowie in der Fügestelle von Messmembran und Grundkörper, die aufgrund der häufigen Verwendung eines Glaslots auch als Glasfritte bezeichnet wird. Ein Eindringen von Prozessmedium führt daher zunächst zu einer Änderung der Kapazität des Diagnosekondensators, bevor das Druckmessergebnis, welches überwiegend durch die Kapazität des Messkondensators bestimmt wird, in erheblichem Maße verfälscht wird. Zur Kompensation des Einflusses einer sich langsam verändernden Permittivität des in der Kavität befindlichen Gemischs auf das Druckmessergebnis kann in vorteilhafter Weise die beispielsweise zyklisch ermittelte Kapazität des Diagnosekondensators bei der Berechnung eines Messwerts für den zu messenden Mediendruck berücksichtigt werden. Somit wird ein korrigierter Ersatzwert erhalten, sodass ein Notbetrieb des Druckmessumformers möglich ist.

Neben dem bereits genannten Verschleiß der Glasfritte durch Mikrorisse oder dem Bruch der Trennmembran kann ein weiteres Fehlerphänomen insbesondere bei trockenen Druckmesszellen für Relativdruck auftreten. Bei Drucksensoren für Relativdruck ist die Kavität bauartbedingt mit der Umgebungsluft verbunden. Das heißt, dass Umgebungsluft auch zwischen die Kondensatorelektroden gelangen kann. Häufig wird ein langer, dünner Schlauch, der über einen Sinterfilter mit der Umgebung gekoppelt ist, als Rückseitenverbindung für Relativdrucksensoren verwendet. Die ruhende Luft im Schlauch besitzt einen hohen Diffusionswiderstand für Wassermoleküle. Veränderungen der Luftfeuchtigkeit in der Umgebung führen verzögert zu entsprechenden Veränderungen in der Kavität des Drucksensors und können, sofern dieser Effekt nicht kompensiert wird, zu Veränderungen der anhand der Kapazitäten des Mess- und Referenzkondensators berechneten Messwerte für den zu messenden Druck führen. Aufgrund der vergleichsweise hohen dielektrischen Polarität von Wasserdampf führt beispielsweise eine geringe Erhöhung der Luftfeuchtigkeit um 5 % bereits zu einer Drift des Messwerts für den Druck von 3 %. Bei Reinigungsarbeiten in Prozessanlagen kann sich die Umgebungsfeuchte sprunghaft ändern, was wiederum ohne geeignete Korrektur zu starken Fehlern bei der Druckmessung führen kann. Wegen der vergleichsweise kleinen Kavität im Drucksensor erfolgen derartige Veränderungen nur sehr langsam. Zudem können Irreversibilitäten auftreten, die durch eine Adhäsion oder Speicherung von Wassermolekülen an spitzwinkligen Kanten in der Kavität verursacht werden. Die Reaktionsschnelligkeit und Empfindlichkeit des Diagnosekondensators bezüglich der relativen Luftfeuchtigkeit in der Kavität kann daher vorteilhaft durch ein Polymerdielektrikum, insbesondere durch eine Kaptonfolie, die zwischen den Elektroden des Diagnosekondensators angeordnet wird, erhöht werden. Dieses zusätzliche Dielektrikum wird also derart angeordnet, dass zumindest ein Teil des elektrischen Feldes des Diagnosekondensators in diesem zu Liegen kommt. Eine Kaptonfolie hat hierbei den Vorteil, dass sie eine hysteresearme Kennlinie ihrer dielektrischen Leitfähigkeit von der relativen Luftfeuchtigkeit hat.

In einer besonders vorteilhaften Weiterbildung wird die ermittelte Kapazität des Diagnosekondensators mit einem ersten vorbestimmten Schwellwert verglichen und im Falle eines Überschreitens des ersten Schwellwerts ein Warnsignal erzeugt und durch den Druckmessumformer ausgegeben, durch welches das Vorliegen eines kritischen Zustands des Drucksensors als Vorstufe einer möglicherweise später folgenden Funktionsstörung angezeigt wird. Das ermöglicht in vorteilhafter Weise eine vorausschauende Erkennung von Störungen und es wird eine Warnung erzeugt, bevor ein Ausfall stattfindet, der bei einem Einsatz des Druckmessumformers in einer prozesstechnischen Anlage möglicherweise mit einem unerwünschten Anlagenstillstand verbunden wäre. In einer weiteren vorteilhaften Weiterbildung kann die Kapazität des Diagnosekondensators zusätzlich mit einem zweiten vorbestimmten Schwellwert verglichen werden, wobei im Falle eines Überschreitens auch des zweiten Schwellwerts ein Alarmsignal erzeugt und ausgegeben wird, durch welches eine in absehbarer Zukunft eintretende Funktionsstörung angezeigt wird. Das hat den Vorteil, dass ein zuverlässiger Hinweis auf einen bevorstehenden Ausfall gegeben wird. Vor einem kostspieligen Anlagenstillstand können somit rechtzeitig Wartungsarbeiten eingeleitet werden.

Die Diagnose kann vorteilhaft derart weitergebildet werden, dass in Abhängigkeit der Kapazität des Diagnosekondensators im Gutzustand, die beispielsweise bei der Inbetriebsetzung ermittelt oder als Parameter vorgegeben ist, in Abhängigkeit einer vorgegebenen dielektrischen Leitfähigkeit eines in die Kavität eindringenden Mediums, der beiden Schwellwerte und des Abstands der Zeitpunkte ihres Überschreitens ein Schätzwert für einen Zeitraum bis zum Auftreten der bevorstehenden Funktionsstörung ermittelt und ausgegeben wird. Anhand dieses Schätzwerts kann nämlich vorteilhaft beurteilt werden, ob eine Reparatur bereits im nächsten Wartungszyklus erforderlich ist. Wartungsmaßnahmen sind damit besser planbar.

Vorzugsweise wird das Warnsignal zur Anzeige eventuell erforderlicher Wartungsmaßnahmen unmittelbar auf einem Servicegerät ausgegeben, damit ein Servicetechniker bereits vor Ort geeignete Anweisungen zur Durchführung der Wartungsarbeiten erhält.

Das Verfahren ist bevorzugt in Software oder in einer Kombination Soft-/Hardware implementiert, sodass die Erfindung auch ein Computerprogramm mit durch einen Computer ausführbaren Programmcodeanweisungen zur Implementierung des oben skizzierten und nachfolgend beschriebenen Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil einer Ansteuer- und Auswerteelektronik des Druckmessumformers oder wird in einem Speicher der Elektronik vorgehalten oder ist in diesen Speicher ladbar, sodass beim Betrieb des Druckmessumformers dessen Diagnose nach dem Verfahren automatisch ausgeführt wird.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Schnittbild des Teils eines Druckmessumformers, der häufig als Messzelle bezeichnet wird, und
- Figur 2: ein Blockschaltbild eines Druckmessumformers mit einer Prinzipdarstellung des Drucksensors.

In den beiden Figuren sind gleiche Teile mit gleichen Bezugszeichen versehen.

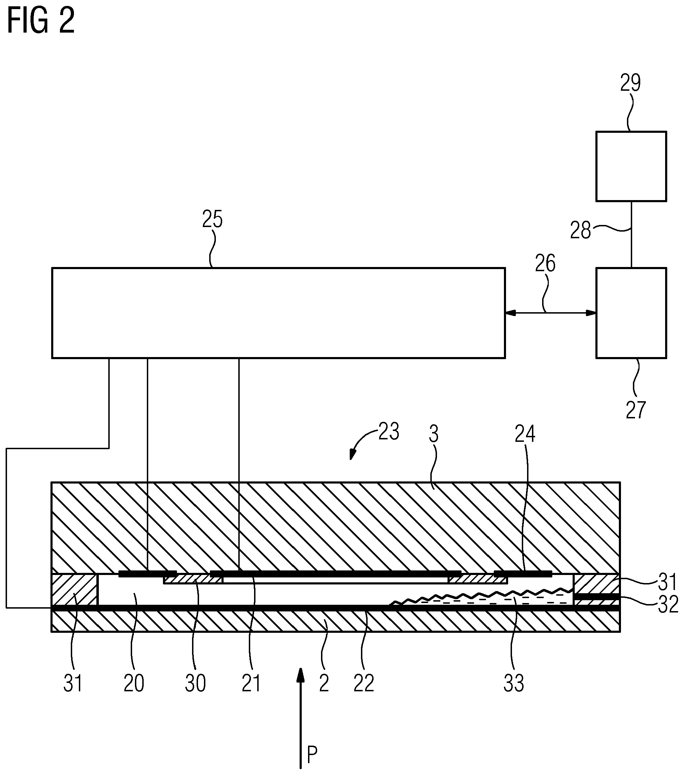

Zentrales Bauteil der im Wesentlichen rotationssymmetrischen Messzelle 1 ist ein scheibenförmiger Drucksensor 23, der eine Sensormembran 2 und einen Grundkörper 3 aufweist. Zwischen Sensormembran 2 und Grundkörper 3 wird eine Kavität 20 eingeschlossen, deren Aufbau später anhand Figur 2 näher erläutert wird. In der Kavität 20 herrscht ein Referenzdruck, der bei einem Absolutdruckmessumformer beispielsweise Vakuum, bei einem Druckmessumformer für Relativdruck beispielsweise dem Umgebungsdruck entspricht. Die jeweilige Auslenkung der Messmembran 2, die von dem anliegenden Druck P und dem in der Kavität 20 herrschenden Referenzdruck abhängig ist, wird mittels des Drucksensors 23 kapazitiv erfasst. Zur Übertragung des Drucks P eines Prozessmediums zur Messmembran 2 dient ein Prozessanschluss 4, welcher im gezeigten Ausführungsbeispiel zugleich ein erstes Gehäuseteil des Druckmessumformers bildet und in einer Nut 5 einen elastischen Dichtring 6 trägt, der hier als O-Ring ausgeführt ist. Ein zweites Gehäuseteil 7, welches nach oben in ein nicht weiter dargestelltes Gehäuse einer Ansteuer- und Auswerteelektronik übergehen kann, bildet mit einer Anschlagfläche 8 einen rückseitigen Stützring für den Drucksensor 23. Für eine schwimmende Lagerung des Drucksensors 23 ist zwischen dem rückseitigen Stützring 7 und der Rückseite des Drucksensors 23 ein hohlzylinderförmiger Distanzring 10 eingelegt, der in radialer Richtung auslenkbar ist und somit das Auftreten von Radialspannungen im Drucksensor 23 bei Temperaturschwankungen vermindert.

Zur Montage der Messzelle 1 wird zunächst der Dichtring 6 in die Nut eingelegt und ist dort aufgrund der schwalbenschwanzförmigen Nutform vor einem Herausfallen zuverlässig gesichert. Anschließend werden der Drucksensor 23 und der Distanzring 10 eingelegt. Zur Erzeugung der zur Lagerung des Drucksensors 23 erforderlichen axialen Einspannkraft wird anschließend das zweite Gehäuseteil 7, das gleichzeitig den rückseitigen Stützring darstellt, aufgesetzt und gegen das erste Gehäuseteil 4 gepresst. Dabei wird der Dichtring 6 derart zusammengedrückt, dass ein Spalt 12 zwischen der den Dichtring 6 umgebenden Fläche des ersten Gehäuseteils 4 und der dem Prozessmedium zugewandten Seite des Drucksensors 23 verbleibt. Die beiden zusammengepressten Gehäuseteile 4 und 7, welche rotationssymmetrisch sind, werden um ihre gemeinsame Achse gedreht und an ihrer kreisförmigen Stoßstelle durch eine Radialschweißung 13 miteinander verschweißt.

Übliche Drucksensoren 3 haben einen Durchmesser von ca. 32 mm. Die Dicke der Messmembran 2 beträgt je nach Druckmessbereich zwischen ca. 0,5 mm und ca. 2 mm. Die Kavität 20 hat eine Höhe von ca. 0,03 mm. Im Überlastfall wird die Messmembran 2 im mittleren Bereich um diesen Betrag verformt und legt sich an den Grundkörper 3 an. Bei stoßartiger Druckbelastung können im Bereich großer Materialspannung, insbesondere im Bereich der Fügestelle zwischen Messmembran 2 und Grundkörper 3, irreversible Überlastungen oder Beschädigungen auftreten. Tritt Prozessmedium aufgrund von Diffusion oder Undichtigkeiten an dem Dichtring 6 vorbei und gelangt zum Umfangsbereich des Drucksensors 23, kann dieses auch in die Kavität 20 gelangen und somit das Messergebnis des Druckmessumformers verfälschen, wenn beispielsweise eine Beschädigung in Form eines Spalts in der Glasfritte entstanden ist.

Anhand Figur 2, die in einer nicht maßstabsgetreuen Darstellung das Aufbauprinzip des Drucksensors 23 verdeutlicht, werden im Folgenden das Verfahren zum Betreiben des Druckmessumformers sowie der Druckmessumformer selbst näher erläutert. Ein erster Kondensator, der in der vorliegenden Anmeldung als Messkondensator bezeichnet wird, wird durch eine erste Elektrode 21, auch als Messelektrode bezeichnet, und eine Gegenelektrode 22 gebildet. Ein zweiter Kondensator, als Referenzkondensator bezeichnet, weist eine im Wesentlichen kreisförmig im Randbereich angeordnete Elektrode 24, auch als Referenzelektrode bezeichnet, und dieselbe Gegenelektrode 22 auf. Die für beide Kondensatoren gemeinsame Gegenelektrode 22 ist durch eine Metallisierung auf der der Kavität 20 zugewandten Seite der Messmembran 2 gebildet. In einer nicht dargestellten, alternativen Ausführungsform ist es selbstverständlich auch möglich, anstelle der gemeinsamen Gegenelektrode 22 für jeden Kondensator gesonderte Gegenelektroden auf der Messmembran 2 vorzusehen.

In einem Druckmessmodus werden durch eine Ansteuer- und Auswerteeinrichtung 25 die jeweiligen Kapazitäten des Mess- und Referenzkondensators erfasst und in einen Messwert des Drucks P gewandelt, welcher über eine Schnittstelle 26 zu einer übergeordneten Steuerung 27 in einer nicht weiter dargestellten prozesstechnischen Anlage übertragen wird. Zur Vor-Ort-Anzeige kann der Messwert des Drucks zudem über eine Schnittstelle 28, beispielsweise ein W-LAN, an ein Servicegerät 29 ausgegeben werden, damit ein Servicemitarbeiter in der Anlage unmittelbar beim Feldgerät den Druckwert ablesen kann, ohne dass das Feldgerät selbst mit einem Anzeigefeld versehen sein muss.

In zyklisch wiederkehrenden Zeitintervallen wechselt die Ansteuer- und Auswerteeinrichtung 25 in einen Diagnosemodus, in dem die Beschaltung eines CDC des Typs AD7746 von Analog Devices derart verändert wird, dass die Kapazität eines Diagnosekondensators, der durch die Messelektrode 21 und die Referenzelektrode 24, welche sich auf derselben Fläche an der Innenwand der Kavität 20 befinden, erfasst und zur Diagnose des Druckmessumformers ausgewertet wird. Bei der Messung der vergleichsweise kleinen Kapazität des Diagnosekondensators, die in der Größenordnung von einem Picofarad liegt, werden die Kapazitäten des Messkondensators sowie des Referenzkondensators, welche etwa um den Faktor 100 größer sind, als Schirmkapazitäten durch den CDC kompensiert. Im Diagnosemodus können bereits kleinere Veränderungen der Permittivität des in der Kavität 20 befindlichen Stoffgemischs, bei Relativdrucksensoren beispielsweise aufgrund einer Veränderung der relativen Luftfeuchtigkeit, erfasst und ihr Einfluss auf die Messung des Druckes P kompensiert werden. Dies kann beispielsweise anhand von zuvor empirisch ermittelten Kennlinien erfolgen, welche die Abhängigkeiten der Kapazitäten von Mess-und Referenzkondensator von der in der Kavität 20 herrschenden relativen Luftfeuchtigkeit beschreiben. Zur Überprüfung kann der Wert der in der Kavität 20 ermittelten relativen Luftfeuchtigkeit zudem auf der Anzeige des Servicegeräts 29 ausgegeben werden, damit ein Servicetechniker diesen mit einem Wert der relativen Feuchte vergleichen kann, den er mit einem gesonderten Sensor in der Umgebung erfasst hat.

Zur Erhöhung der Empfindlichkeit der Diagnosekapazität ist in der Kavität 20 ein kreisringförmiges Polymerdielektrikum 30 angeordnet, welches die im mittleren Bereich angeordnete Messelektrode 21 und die ringförmige, im Randbereich angeordnete Referenzelektrode 24 teilweise überdeckt. Als Polymerdielektrikum 30 eignet sich vorteilhaft eine Kaptonfolie, die sich in ihrer Kennlinie, welche die Abhängigkeit der dielektrischen Leitfähigkeit von der relativen Luftfeuchte beschreibt, durch eine besonders geringe Hysterese auszeichnet.

Abweichend vom dargestellten Ausführungsbeispiel kann das Polymerdielektrikum zwischen oder unter den beiden Elektroden angeordnet werden. Für eine einfache Montage ist auch eine nachträgliche Einbringung des Polymerdielektrikums durch eine Öffnung im Grundkörper in eine für die Aufnahme des Polymerdielektrikums vorgesehene Ausnehmung des Grundkörpers vorteilhaft, wobei die Einbringung vorteilhaft erst erfolgt, nachdem der Grundkörper bereits unter Anwendung hoher Temperatur durch Verschmelzen der Glasfritte mit der Messmembran verbunden wurde.

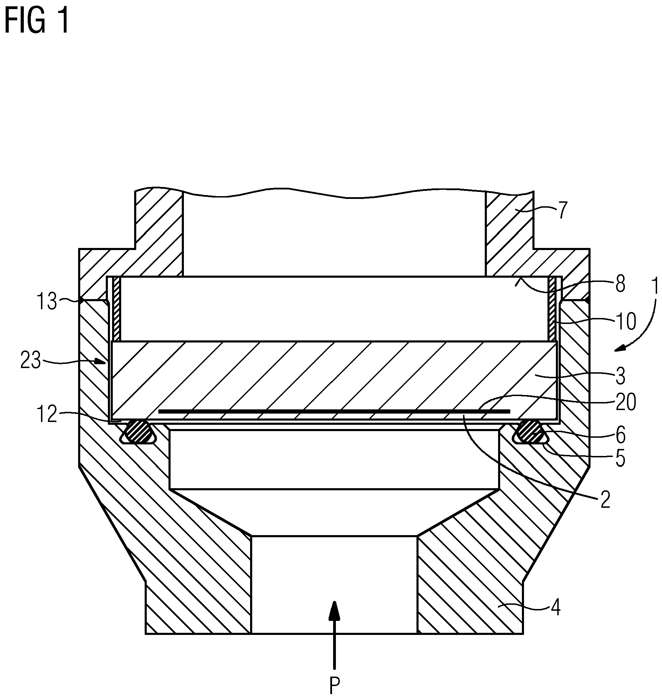

Bereiche des Drucksensors 23, die bei an der Messmembran 2 anliegendem Druck P besonders hohen mechanischen Spannungen ausgesetzt sind, sind der Randbereich der Messmembran 2 sowie eine an der Fügestelle von Messmembran 2 und Grundkörper 3 befindliche sogenannte Glasfritte 31. Glaslote, die üblicherweise zur Herstellung der Glasfritte 31 verwendet werden, neigen bei thermischer und/oder mechanischer Belastung zur Rissbildung. Beispielsweise durch einen Riss 32 kann Prozessmedium 33, welches zuvor eine undichte Stelle der Dichtung 6 (Figur 1) passiert hat, in die Kavität 20 eindringen und dort beispielsweise einen Teil der Gegenelektrode 22 benetzen. Die dielektrische Leitfähigkeit des eindringenden Mediums 33 ist meist höher als diejenige der im fehlerfreien Zustand in der Kavität 20 vorhandenen Befüllung. Beispielsweise hat Wasser eine relative Permittivität von 80 und Öl eine relative Permittivität zwischen 2 und 5. Bei lediglich einer geringen Menge eingedrungenen Prozessmediums 33 ist der Druckmessumformer weiterhin funktionsfähig. Zur vorausschauenden Erkennung von Störungen, die sich mit einer langsam ansteigenden Permittivität der Befüllung in der Kavität 20 ankündigen, wird die ermittelte Kapazität des Diagnosekondensators mit einem ersten, vorzugsweise in Abhängigkeit des jeweiligen Prozessmediums vorbestimmten Schwellwert verglichen. Im Falle eines Überschreitens des ersten Schwellwerts wird durch die Ansteuer- und Auswerteeinrichtung 25 ein Warnsignal erzeugt und über die Schnittstelle 26 als Warnmeldung an die übergeordnete Steuerung 27 ausgegeben, durch welches das Vorliegen eines kritischen Zustands des Drucksensors 23 als Vorstufe einer möglicherweise folgenden Funktionsstörung angezeigt wird. Die Warnmeldung kann zusätzlich auf einem Servicegerät 29 zur Information eines Servicetechnikers über den kritischen Zustand des Druckmessumformers angezeigt werden, und zwar bevor dieser ausfällt. Im weiteren Betrieb des Druckmessumformers wird der ausgegebene Wert des anliegenden Drucks P durch die Ansteuer- und Auswerteeinrichtung 25 zur Kompensation des Einflusses einer sich ändernden Permittivität des in der Kavität 20 befindlichen Stoffgemischs entsprechend korrigiert. Ergänzend wird die Kapazität des Diagnosekondensators noch mit einem zweiten, vorzugsweise in Abhängigkeit des jeweiligen Prozessmediums vorbestimmten Schwellwert verglichen, bei dessen Überschreiten durch ein Alarmsignal eine bevorstehende Funktionsstörung angezeigt wird. Beispielsweise durch Ausgabe des Alarmsignals auf dem Servicegerät 29 können rechtzeitige Wartungsarbeiten eingeleitet werden, bevor ein kostspieliger Anlagenstillstand auftritt. Der zweite Schwellwert ist vorzugsweise so gewählt, dass beispielsweise bei konstanter Größe des Risses 32 noch für einen absehbaren Zeitraum zumindest eine eingeschränkte Funktion des Druckmessumformers aufrechterhalten werden kann.

In Abhängigkeit der dielektrischen Leitfähigkeit des eindringenden Prozessmediums 33 kann abgeschätzt werden, zu welchem Zeitpunkt die fortschreitende Befüllung der Kavität 20 mit Prozessmedium 33 keine Messung des Drucks P mehr zulässt. Der Schätzwert für den verbleibenden Zeitraum bis zum erwarteten Auftreten des Funktionsausfalls kann in Abhängigkeit eines vorgegebenen Werts der Kapazität des Diagnosekondensators im Gutzustand, der bekannten dielektrischen Leitfähigkeit des in die Kavität 20 eindringenden Prozessmediums 33, der beiden vorgegebenen Schwellwerte und des Abstands der Zeitpunkte ihres Überschreitens ermittelt und ausgegeben werden. Durch Kenntnis der zur Verfügung stehenden Restlaufzeit des Druckmessumformers kann beispielsweise entschieden werden, ob der Druckmessumformer bereits beim nächsten Wartungszyklus oder erst beim übernächsten Wartungszyklus ausgetauscht werden muss. Wartungsmaßnahmen sind damit besser planbar. Erfolgt die Ausgabe des Warnsignals zur Anzeige eventuell erforderlicher Wartungsmaßnahmen auf dem Servicegerät 29, kann ein Servicetechniker vorteilhaft vor Ort die für eine Planung seiner Wartungsmaßnahmen erforderlichen Informationen erhalten.

## Patentansprüche

1. Verfahren zum Betreiben eines Druckmessumformers mit einem Drucksensor (23),
wobei der Drucksensor (23) eine biegsame Messmembran (2) und einen Grundkörper (3) aufweist, zwischen welchen eine Kavität (20) mit einem Referenzdruck eingeschlossen ist,
wobei eine Auslenkung der Messmembran (2) von einem Mediendruck (P), der medienseitig an der Messmembran (2) anliegt, und dem Referenzdruck abhängig ist, wobei zur Erfassung einer Auslenkung der Messmembran (2) zumindest ein erster Kondensator vorgesehen ist, der zwei im mittleren Bereich der Messmembran (2) bzw. des Grundkörpers (3) angeordnete Elektroden (21, 22) mit in Abhängigkeit der Auslenkung veränderlichem Elektrodenabstand aufweist, und
wobei zumindest ein zweiter Kondensator vorgesehen ist, der zwei im Randbereich der Messmembran (2) bzw. des Grundkörpers (3) angeordnete Elektroden (22, 24) aufweist, **dadurch gekennzeichnet,**
**dass** die Kapazität eines Diagnosekondensators, der durch eine Elektrode (21) des ersten Kondensators und eine auf derselben Fläche angeordnete Elektrode (24) des zweiten Kondensators gebildet ist, ermittelt und zur Diagnose des Druckmessumformers ausgewertet wird.

2. Verfahren nach Anspruch 1, **dadurch gekennzeichnet, dass** zur Kompensation des Einflusses der Permittivität des in der Kavität (20) befindlichen Mediums die ermittelte Kapazität des Diagnosekondensators bei der Berechnung eines Messwerts für den Mediendruck (P) berücksichtigt wird.

3. Verfahren nach Anspruch 2, **dadurch gekennzeichnet, dass** zwischen den Elektroden (21, 24) des Diagnosekondensators ein Polymerdielektrikum (30) zur Erhöhung der Feuchteempfindlichkeit angeordnet ist.

4. Verfahren nach einem der vorhergehenden Ansprüche, **dadurch gekennzeichnet, dass** die ermittelte Kapazität des Diagnosekondensators mit einem ersten vorbestimmten Schwellwert verglichen wird und dass im Falle eines Überschreitens des ersten Schwellwerts ein Warnsignal erzeugt und ausgegeben wird, durch welches das Vorliegen eines kritischen Zustands des Drucksensors (23) als Vorstufe einer möglicherweise folgenden Funktionsstörung angezeigt wird.

5. Verfahren nach Anspruch 4, **dadurch gekennzeichnet, dass** im Falle eines Überschreitens des ersten Schwellwerts weiterhin die Kapazität des Diagnosekondensators mit einem zweiten vorbestimmten Schwellwert verglichen wird und dass im Falle eines Überschreitens auch des zweiten Schwellwerts ein Alarmsignal erzeugt und ausgegeben wird, durch welches eine bevorstehende Funktionsstörung angezeigt wird.

6. Verfahren nach Anspruch 5, **dadurch gekennzeichnet, dass** in Abhängigkeit eines vorgegebenen Werts der Kapazität des Diagnosekondensators im Gutzustand, einer vorgegebenen dielektrischen Leitfähigkeit eines in die Kavität (20) eindringenden Mediums (33), der beiden Schwellwerte und des Abstands der Zeitpunkte ihres Überschreitens ein Schätzwert für einen Zeitraum bis zum Auftreten der Funktionsstörung ermittelt und ausgegeben wird.

7. Verfahren nach einem der Ansprüche 4 bis 6, **dadurch gekennzeichnet, dass** das Warnsignal zur Anzeige eventuell erforderlicher Wartungsmaßnahmen auf einem Servicegerät (29) ausgegeben wird.

8. Druckmessumformer mit einem Drucksensor (23),
wobei der Drucksensor eine biegsame Messmembran (2) und einen Grundkörper (3) aufweist, zwischen welchen eine Kavität (20) mit einem Referenzdruck eingeschlossen ist,
wobei eine Auslenkung der Messmembran (2) von einem Mediendruck (P), der medienseitig an der Messmembran (2) anliegt, und dem Referenzdruck abhängig ist,
wobei zur Erfassung einer Auslenkung der Messmembran (2) zumindest ein erster Kondensator vorgesehen ist, der zwei im mittleren Bereich der Messmembran (2) bzw. des Grundkörpers (3) angeordnete Elektroden (21, 22) mit in Abhängigkeit der Auslenkung veränderlichem Elektrodenabstand aufweist,
wobei zumindest ein zweiter Kondensator vorgesehen ist, der zwei im Randbereich der Messmembran (2) bzw. des Grundkörpers (3) angeordnete Elektroden (22, 24) aufweist, und
mit einer Ansteuer- und Auswerteeinrichtung (25) zur Erfassung der Kapazität zumindest des ersten Kondensators sowie zur Bestimmung und Ausgabe eines Messwerts für den Mediendruck (P) in Abhängigkeit der erfassten Kapazität, **dadurch gekennzeichnet,**
**dass** die Ansteuer- und Auswerteeinrichtung (25) zudem dazu ausgebildet ist, die Kapazität eines Diagnosekondensators, der durch eine Elektrode (21) des ersten Kondensators und eine auf derselben Fläche angeordnete Elektrode (24) des zweiten Kondensators gebildet ist, zu ermitteln und zur Diagnose des Druckmessumformers auszuwerten.

9. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

10. Computerprogrammprodukt, insbesondere Datenträger oder Speichermedium, mit einem durch einen Computer ausführbaren Computerprogramm gemäß Anspruch 9.

## Claims

1. Method for operating a pressure transducer comprising a pressure sensor (23),
wherein the pressure sensor (23) has a flexible measurement membrane (2) and a base body (3), between which a cavity (20) is enclosed with a reference pressure,
wherein a deflection of the measurement membrane (2) is dependent on a media pressure (P), which is present on the media side at the measurement membrane (2), and on the reference pressure, wherein in order to capture a deflection of the measurement membrane (2) at least one first capacitor is provided which has two electrodes (21, 22) arranged in the central region of the measurement membrane (2) or of the base body (3) with a variable electrode spacing depending on the deflection, and
wherein at least one second capacitor is provided which has two electrodes (22, 24) arranged in the edge region of the measurement membrane (2) or of the base body (3), **characterised in that**
the capacitance of a diagnostics capacitor which is formed by one electrode (21) of the first capacitor and one electrode (24) of the second capacitor arranged on the same surface is determined and evaluated for the diagnosis of the pressure transducer.

2. Method according to claim 1, **characterised in that** in order to compensate for the influence of the permittivity of the medium contained in the cavity (20) the determined capacitance of the diagnostics capacitor is taken into consideration in the calculation of a measurement value for the media pressure (P) .

3. Method according to claim 2, **characterised in that** a polymer dielectric (30) is arranged between the electrodes (21, 24) of the diagnostics capacitor in order to increase the sensitivity to humidity.

4. Method according to one of the preceding claims, **characterised in that** the determined capacitance of the diagnostics capacitor is compared with a first predetermined threshold value and that in the event of the first threshold value being exceeded a warning signal is generated and output, which warning signal serves to indicate the existence of a critical state of the pressure sensor (23) as a precursor of a malfunction possibly following later.

5. Method according to claim 4, **characterised in that** in the event of the first threshold value being exceeded the capacitance of the diagnostics capacitor is furthermore compared with a second predetermined threshold value and that in the event of the second threshold value also being exceeded an alarm signal is generated and output, which alarm signal serves to indicate an impending malfunction.

6. Method according to claim 5, **characterised in that** an estimated value for a period of time until the occurrence of the malfunction is determined and output depending on a predefined value of the capacitance of the diagnostics capacitor in the go state, on a predefined dielectric conductivity of a medium (33) penetrating into the cavity (20), on the two threshold values and on the interval between the points in time when they are exceeded.

7. Method according to one of claims 4 to 6, **characterised in that** the warning signal indicating possibly required maintenance measures is output on a service device (29).

8. Pressure transducer comprising a pressure sensor (23), wherein the pressure sensor has a flexible measurement membrane (2) and a base body (3), between which a cavity (20) is enclosed with a reference pressure,
wherein a deflection of the measurement membrane (2) is dependent on a media pressure (P), which is present on the media side at the measurement membrane (2), and on the reference pressure,
wherein in order to capture a deflection of the measurement membrane (2) at least one first capacitor is provided which has two electrodes (21, 22) arranged in the central region of the measurement membrane (2) or of the base body (3) with a variable electrode spacing depending on the deflection, wherein at least one second capacitor is provided which has two electrodes (22, 24) arranged in the edge region of the measurement membrane (2) or of the base body (3), and
having a control and calculation unit (25) in order to capture the capacitance at least of the first capacitor and also to determine and output a measurement value for the media pressure (P) depending on the captured capacitance, **characterised in that**
the control and calculation unit (25) is moreover designed in order to determine the capacitance of a diagnostics capacitor, which is formed by one electrode (21) of the first capacitor and one electrode (24) of the second capacitor arranged on the same surface, and evaluate said capacitance for the diagnosis of the pressure transducer.

9. Computer program containing program code instructions which can be executed by a computer in order to implement the method according to one of claims 1 to 7 when the computer program is executed on a computer.

10. Computer program product, in particular data medium or storage medium, containing a computer program according to claim 9 which can be executed by a computer.

## Revendications

1. Procédé pour faire fonctionner un transducteur de mesure de pression ayant un capteur (23) de pression,
dans lequel le capteur (23) de pression a une membrane (2) de mesure souple et un corps (3) de base, entre lesquels est enclose une cavité (20) ayant une pression de référence,
dans lequel une excursion de la membrane (2) de mesure dépend d'une pression (P) d'un milieu, qui s'applique du côté du milieu à la membrane (2) de mesure, et de la pression de référence, dans lequel pour détecter une excursion de la membrane (2) de mesure, il est prévu au moins un premier condensateur, qui a deux électrodes disposées dans la partie médiane de la membrane (2) de mesure ou du corps (3) de base, et qui a une distance entre électrodes (21, 22) variable en fonction de l'excursion, et
dans lequel il est prévu au moins un deuxième condensateur, qui a deux électrodes (22, 24) disposées dans la partie de bord de la membrane (2) de mesure ou du corps (3) de base, **caractérisé**
**en ce que** l'on détermine la capacité d'un condensateur de diagnostic, formé par une électrode (21) du premier condensateur et par une électrode (24), disposée sur la même surface, du deuxième condensateur et on l'exploite pour le diagnostic du transducteur de mesure de pression.

2. Procédé suivant la revendication 1, **caractérisé en ce que**, pour compenser l'influence de la permitivité du milieu se trouvant dans la cavité, on prend en compte la capacité déterminée du condensateur de diagnostic dans le calcul d'une valeur de mesure de la pression (P) du milieu.

3. Procédé suivant la revendication 2, **caractérisé en ce qu'**un diélectrique (30) polymère est disposé entre les électrodes (21, 24) du condensateur de diagnostic pour augmenter la sensibilité à l'humidité.

4. Procédé suivant l'une des revendications précédentes, **caractérisé en ce que** l'on compare la capacité déterminée du condensateur de diagnostic à une première valeur de seuil déterminée à l'avance et **en ce que**, si l'on constate un dépassement de la première valeur de seuil, on produit et on émet un signal d'avertissement, par lequel la présence d'un état critique du capteur (23) de pression est indiqué comme précurseur d'une perturbation du fonctionnement à venir éventuelle.

5. Procédé suivant la revendication 4, **caractérisé en ce que**, si l'on constate un dépassement de la première valeur de seuil, on compare en outre la capacité du condensateur de diagnostic à une deuxième valeur de seuil déterminée à l'avance et **en ce que**, si l'on constate un dépassement également de la deuxième valeur de seuil, on produit et on émet un signal d'avertissement, par lequel une perturbation en cours du fonctionnement est indiquée.

6. Procédé suivant la revendication 5, **caractérisé en ce qu'**en fonction d'une valeur donnée à l'avance de la capacité du condensateur de diagnostic, en bon état, d'une conductivité diélectrique donnée à l'avance d'un milieu (33) introduit dans la cavité (20), des deux valeurs de seuil et de la distance entre les instants de leur dépassement, on détermine et on émet une valeur d'estimation d'une durée jusqu'à l'apparition de la perturbation du fonctionnement.

7. Procédé suivant l'une des revendications 4 à 6, **caractérisé en ce que** l'on émet le signal d'avertissement pour indiquer des mesures d'entretien, éventuellement nécessaires, vers un appareil (29) de service.

8. Transduction de mesure de pression comprenant un capteur (23) de pression,
dans lequel le capteur (23) de pression a une membrane (2) de mesure souple et un corps (3) de base, entre lesquels est enclose une cavité (20) ayant une pression de référence,
dans lequel une excursion de la membrane (2) de mesure dépend d'une pression (P) d'un milieu, qui s'applique du côté du milieu à la membrane (2) de mesure, et de la pression de référence,
dans lequel pour détecter une excursion de la membrane (2) de mesure, il est prévu au moins un premier condensateur, qui a deux électrodes disposées dans la partie médiane de la membrane (2) de mesure ou du corps (3) de base, et qui a une distance entre électrode (21, 22) variable en fonction de l'excursion, et
dans lequel il est prévu au moins un deuxième condensateur, qui a deux électrodes (22, 24) disposées dans la partie de bord de la membrane (2) de mesure ou du corps (3) de base, et
comprenant un dispositif (25) de commande et d'exploitation pour détecter la capacité au moins du premier condensateur ainsi que pour déterminer et émettre une valeur de mesure de la pression (P) du milieu en fonction de la capacité détectée, **caractérisé**
**en ce que** le dispositif (25) de commande et d'exploitation est constitué en outre pour déterminer la capacité d'un condensateur de diagnostic formé par une électrode (21) du premier condensateur et une électrode (24) disposée sur la même surface du deuxième condensateur et pour l'exploiter pour le diagnostic du transducteur de mesure.

9. Programme d'ordinateur comprenant des instructions de code de programme pouvant être exécutées sur un ordinateur pour la mise en oeuvre du procédé suivant l'une des revendications 1 à 7, lorsque le programme d'ordinateur est réalisé sur un ordinateur.

10. Produit de programme d'ordinateur, notamment support de données ou support de mémoire, comprenant un programme d'ordinateur pouvant être réalisé suivant sur un ordinateur suivant la revendication 9.
